# EUROPEAN PATENT SPECIFICATION

(11) **EP 2 738 076 B1**
(45) Date of publication and mention of the grant of the patent: **06.09.2017**
(21) Application number: 12818370.4
(22) Date of filing: 21.06.2012
(51) Int. Cl.: B62K 5/02, B62K 25/08, F16F 9/54, B62K 25/00, B60G 3/01, B60G 13/00

(54) **SUSPENSION DEVICE**
AUFHÄNGUNGSVORRICHTUNG
SUSPENSION

(30) Priority: 25.07.2011 JP 2011161519
(43) Date of publication of application: 04.06.2014
(73) Proprietor: KYB Corporation, Tokyo 105-6111 (JP); Yamaha Hatsudoki Kabushiki Kaisha, Iwata-shi, Shizuoka 438-8501 (JP)
(72) Inventor: YOSHIMOTO, Tsutomu, Tokyo 105-6111 (JP); TAKANO, Kazuhisa, Shizuoka 4388501 (JP)
(74) Representative: Grünecker Patent- und Rechtsanwälte PartG mbB
(86) International application number: PCT/JP2012/065828
(87) International publication number: WO 2013/015049

(56) References cited:
- EP-A1- 1 571 016
- EP-A2- 2 305 551
- DE-U1- 9 309 203
- JP-A- 63 176 791
- JP-A- 63 275 491
- JP-A- 2004 237 791
- JP-A- 2004 237 791
- JP-A- 2008 168 893

## Description

### TECHNICAL FIELD

This invention relates to an improvement of a suspension device, being interposed between a vehicle body and a wheel, capable of suspending the wheel in a cantilever manner.

### BACKGROUND ART

There is known a suspension device, being interposed between a vehicle body and a wheel, capable of suspending the wheel in a cantilever manner. For example, JP 63-176791 A and JP 63-176792 A disclose a front fork for suspending a front wheel serving as a steering wheel of a motor bicycle. JP 63-176791 A shows a suspension device according to the preamble of claim 1.

The suspension device includes a pair of inner tubes coupled to the vehicle body side through an intermediation of a bracket, and outer tubes coupled to one side of an axle (wheel side) and having a pair of cylindrical recesses formed therein so as to allow the respective inner tubes to be inserted therethrough in a freely slidable manner.

The inner tubes form shock absorber bodies together with the respective cylindrical recesses that allow the inner tubes to be inserted therethrough. Each shock absorber body accommodates a suspension spring for absorbing a shock received by the vehicle, and a damping force generating portion for damping extending and contracting motions that may occur along with the absorption of the shock.

The bracket for coupling the inner tubes is linked to a lower end of a steering shaft axially supported in a freely rotatable manner by a head pipe of a frame that forms the vehicle body. The bracket is configured to turn about the steering shaft.

Thus, the bracket turns in accordance with the rotation of the steering shaft without relative rotation of the inner tube and the outer tube, and a direction of the front wheel is changed to allow steering of the motor bicycle and suspension of the motor bicycle in a cantilever manner.

### SUMMARY OF INVENTION

In the above-mentioned related art suspension device, however, the inner tubes slide through the respective cylindrical recesses at the same time, and hence it is necessary that the cylindrical recesses be processed so as to be parallel to each other with extremely high accuracy. Therefore, the process is highly difficult to carry out.

It is further necessary that the inner tubes be coupled through an intermediation of the bracket so as to be parallel to each other, and hence the process of forming the holes in the bracket for retaining the inner tubes is highly difficult to carry out as well.

Further, when the above-mentioned related art suspension device is applied to a motor tricycle as disclosed in JP 2008-168893 A, in which two front wheels serve as steering wheels and one rear wheel serves as a drive wheel, two shock absorber bodies are mounted for each front wheel of a single motor tricycle, in other words, four shock absorber bodies are mounted in total. As a result, the number of components is increased and the cost is therefore increased.

It is an object of the present invention to provide a suspension device for suspending a wheel in a cantilever manner, which is easy to process and can be reduced in number of components when mounted to a motor tricycle as compared to the related art.

This is achieved by providing a suspension device according to claim 1.

Embodiments of the present invention and advantages thereof are described in detail below with reference to the accompanying drawings.

### BRIEF DESCRIPTION OF DRAWINGS

FIG. 1 is a partially cutout front view illustrating a use state of a suspension device according to an embodiment of this invention when the suspension device is maximally extended.
FIG. 2 is an enlarged perspective view illustrating a main part (periphery of a bracket) of FIG. 1.
FIG. 3A is an enlarged longitudinal cross-sectional view illustrating a main part (periphery of a piston) of FIG. 1.
FIG. 3B is an enlarged longitudinal cross-sectional view illustrating a main part (periphery of a check valve) of FIG. 3A.
FIG. 4 is an enlarged longitudinal cross-sectional view illustrating a main part (periphery of a guide member) of FIG. 1.

### DESCRIPTION OF EMBODIMENTS

A suspension device according to an embodiment of this invention is described with reference to the drawings. The same reference symbols of the respective drawings denote the same or corresponding components.

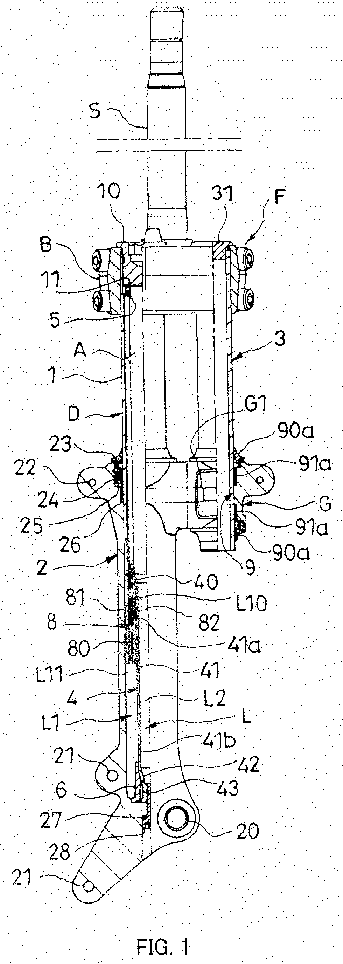

As illustrated in FIG. 1, a suspension device F according to this embodiment includes a shock absorber body D including an inner tube 1, and an outer tube 2 that allows the inner tube 1 to be inserted therethrough in a freely slidable manner.

Further, the suspension device F includes a single guide rod 3 fixed to the inner tube 1 in parallel thereto, and a guide member G fixed to the outer tube 2, for axially supporting the guide rod 3 so that the guide rod 3 passes therethrough in a freely slidable manner.

In a motor tricycle including two front wheels serving as steering wheels and one rear wheel serving as a drive wheel, the suspension device F is applied as each of a pair of front wheel suspension devices for suspending the respective front wheels.

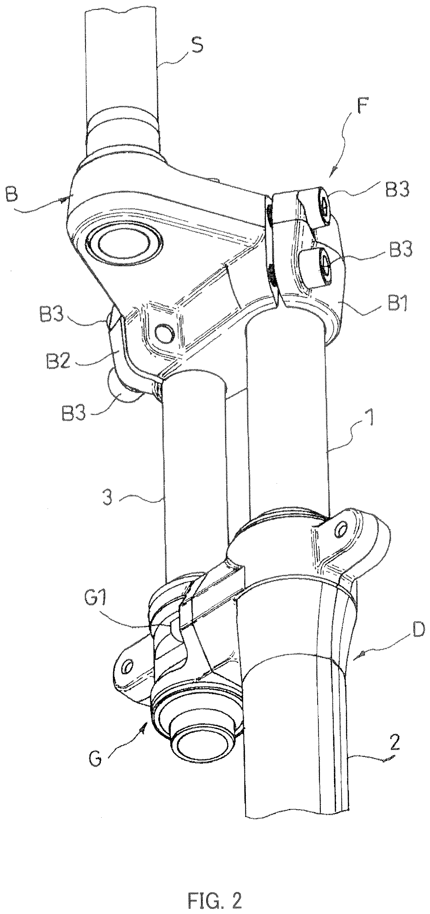

It should be noted that FIGS. 1 and 2 illustrate one suspension device F alone, but the other suspension device paired with the one suspension device F also has the same configuration as the one suspension device F illustrated in FIGS. 1 and 2.

A bracket B for fixing the guide rod 3 to the inner tube 1 is formed into a substantially triangular shape as illustrated in FIG. 2, and a steering shaft S is linked to one vertex portion of the bracket B. The steering shaft S of each suspension device F extends upwards from the vertex portion, and is coupled to a handlebar (not shown) through an intermediation of a link mechanism (not shown).

It should be noted that the link mechanism may adopt a well-known configuration such as a configuration described in, for example, JP 2008-168893 A, and only needs to allow the bracket B to turn about an axis of the steering shaft S through operation of the handlebar.

An inner tube retaining portion B1 and a guide rod retaining portion B2 are formed at the other two vertex portions of the bracket B, respectively. The inner tube retaining portion B1 and the guide rod retaining portion B2 are each formed into an annular shape having a cutout in part.

Under a state in which an upper end portion of the inner tube 1 in FIG. 2 is inserted into the inner tube retaining portion B1 and an upper end portion of the guide rod 3 in FIG. 2 is inserted into the guide rod retaining portion B2, gaps of the respective cutouts are narrowed with bolts B3 so that the inner tube 1 and the guide rod 3 are fixed to the bracket B.

A cap member 10 for closing an upper opening of the shock absorber body D in FIG. 1 is provided to an upper opening portion of the inner tube 1 in FIG. 1, and a cylinder 4 extends upwards on a bottom portion of the outer tube 2. The shock absorber body D including the inner tube 1 and the outer tube 2 accommodates a suspension spring 5 that is interposed between the cap member 10 and the cylinder 4, and is formed of a coil spring for constantly biasing the shock absorber body D in an extending direction.

Further, a working fluid chamber L for storing a working fluid is formed inside the shock absorber body D, and an air chamber A is formed above a liquid surface (not shown) of the working fluid chamber L. The suspension spring 5 and the air chamber A of the shock absorber body D absorb a shock received by the vehicle, and a damping force generating portion described later suppresses extending and contracting motions of the suspension device F that may occur along with the absorption of the shock.

An axle-side mounting portion 20 mounted to one side of an axle, caliper retaining portions 21 and 21 for retaining a caliper for a disc brake, and a fender mounting portion 22 for mounting a fender are formed on an outer side of the outer tube 2. The outer tube 2 is formed into a bottomed cylindrical shape to serve as a bottom case.

On an inner periphery of an opening portion of the outer tube 2, a dust seal 23, an oil seal 24, a spacer 25, and a bearing member 26 are provided in series. The dust seal 23, the oil seal 24, the spacer 25, and the bearing member 26 are each formed into an annular shape and held in slidable contact with an outer periphery of the inner tube 1.

The cylinder 4 extending upwards on the bottom portion of the outer tube 2 is supported by a bolt 28 that is inserted into the bottom portion of the outer tube 2 through an intermediation of a packing 27. In this manner, the cylinder 4 extends upwards from the bottom portion.

The cylinder 4 is formed into a cylindrical shape, and includes a piston portion 40 formed at an upper end portion in FIG. 1, a cylinder body 41 provided coaxially and continuously with a lower side of the piston portion 40 in FIG. 1, a tapered portion 42 provided coaxially and continuously with a lower side of the cylinder body 41 in FIG. 1 and gradually reduced in diameter, and a small diameter portion 43 provided coaxially and continuously with a lower side of the tapered portion 42 in FIG. 1 at a small diameter with an inner periphery that allows the bolt 28 to threadedly engage therewith.

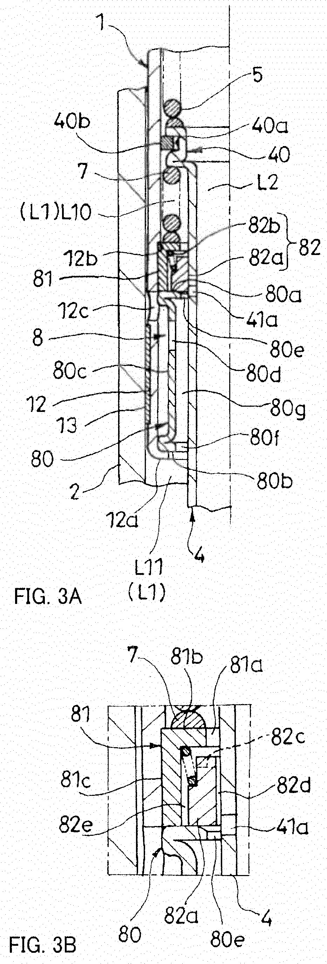

As illustrated in FIG. 3A, the piston portion 40 has an annular groove 40a formed in an outer periphery thereof to have a C-shape in cross section. A piston ring 40b to be brought into slidable contact with an inner periphery of the inner tube 1 is mounted to the groove 40a.

Thus, the working fluid chamber L formed inside the shock absorber body D is partitioned into an extra-cylinder working fluid chamber L1 and an intra-cylinder working fluid chamber L2 by the piston portion 40 and the cylinder 4. The extra-cylinder working fluid chamber L1 is formed on an outer side of the cylinder 4, and the intra-cylinder working fluid chamber L2 is formed on an inner side of the cylinder 4.

The piston portion 40 serves also as a lower spring bearing for a suspension spring, which bears the suspension spring 5. A lower end of the suspension spring 5 in FIG. 3A abuts against an upper side of the piston portion 40 in FIG. 3A.

The piston portion 40 serves also as an upper spring bearing for a rebound spring. When the suspension device F is maximally extended, an upper end of a rebound spring 7 described later abuts against a lower side of the piston portion 40 in FIG. 3A.

The cylinder body 41 provided continuously with the lower side of the piston portion 40 in FIG. 1 has a head-side orifice 41a formed at an upper portion of the cylinder body 41 in FIG. 1, and a bottom-side orifice 41b formed at a lower portion of the cylinder body 41 in FIG. 1.

The head-side orifice 41a and the bottom-side orifice 41b communicate the extra-cylinder working fluid chamber L1 and the intra-cylinder working fluid chamber L2 to each other, and allow a flow path resistance to be generated when the working fluid passes through the respective orifices 41a and 41b.

Further, a cylindrical oil lock piece 6 is arranged on an outer periphery of the tapered portion 42 provided continuously with the lower side of the cylinder body 41 in FIG. 1. The oil lock piece 6 forms an oil lock mechanism together with an oil lock case 80 described later, to thereby mitigate a shock that may be generated when the suspension device F is maximally contracted.

The inner tube 1 moves in and out through the outer tube 2 with its inner periphery brought into slidable contact with an outer periphery of the piston ring 40b of the cylinder 4. The upper opening of the inner tube 1 in FIG. 1 is closed by the cap member 10 that threadedly engages with the inner periphery at the upper end portion in FIG. 1.

An upper spring bearing 11 for a suspension spring, which is formed into an annular plate shape, is provided on a lower surface of the cap member 10 in FIG. 1. The suspension spring 5 is interposed between the upper spring bearing 11 and the piston portion 40 serving also as the lower spring bearing.

As illustrated in FIG. 3A, the inner tube 1 includes a piston retaining portion 12 formed on an inner periphery at the lower end portion that is increased in diameter. A lower end of the piston retaining portion 12 in FIG. 3A is crimped inward, and thus a piston 8 is retained between a crimped portion 12a and a stepped portion 12b formed at an upper end of the piston retaining portion 12 in FIG. 3A.

An annular bearing member 13 to be brought into slidable contact with the inner periphery of the outer tube 2 is mounted to an outer periphery of the piston retaining portion 12 of the inner tube 1. The inner tube 1 is axially supported in a freely slidable manner by the bearing member 13 and the bearing member 26 mounted to the outer tube 2.

In the piston retaining portion 12, there is formed a communication hole 12c for communicating an inner side of the piston retaining portion 12 and a lubrication gap (not denoted by symbol) formed between the outer tube 2 and the inner tube 1.

The extra-cylinder working fluid chamber L1 formed on the outer side of the cylinder 4 is partitioned into two action chambers L10 and L11 by the piston 8 that is retained by the piston retaining portion 12. The extension-side action chamber L10 is formed on the upper side in FIGS. 1 and 3, and the compression-side action chamber L11 is formed on the lower side in FIGS. 1 and 3.

The piston 8 includes an annular seat member 81 and oil lock case 80 that are sandwiched between the stepped portion 12b and the crimped portion 12a of the inner tube 1, and a check valve 82 arranged on an inner side of the seat member 81.

As illustrated in FIG. 3B, the seat member 81 includes a spring bearing portion 81b formed into an annular plate shape to have a gap 81a formed between an inner periphery of the spring bearing portion 81b and the outer periphery of the cylinder 4, and a cylindrical case portion 81c provided vertically from an end portion on an outer periphery of the spring bearing portion 81b.

The seat member 81 serves also as a lower spring bearing for a rebound spring, and the spring bearing portion 81b bears the rebound spring 7.

When the suspension device F is maximally extended, as illustrated in FIG. 3A, the rebound spring 7 is compressed between the seat member 81 and the piston portion 40, to thereby mitigate a shock that may be generated when the suspension device F is maximally extended.

The check valve 82 arranged on the inner side of the seat member 81 includes a valve body 82a formed into an annular shape, and a biasing spring 82b for biasing the valve body 82a towards the oil lock case 80 (in FIG. 2, downwards).

As illustrated in FIG. 3B, in an upper surface of the valve body 82a in FIG. 3B, a groove 82c is formed along a radial direction thereof. An inner flow path 82d is formed between an inner periphery of the valve body 82a and the outer periphery of the cylinder 4, and an outer flow path 82e is formed between an inner periphery of the case portion 81c of the seat member 81 and an outer periphery of the valve body 82a.

When the valve body 82a is seated on the oil lock case 80 so that the check valve 82 is closed, the outer flow path 82e is closed. When the valve body 82a moves upwards in FIG. 3 against a biasing force of the biasing spring 82b so that the valve body 82a abuts against the spring bearing portion 81b of the seat member 81, on the other hand, the check valve 82 is opened, and the working fluid flows through the outer flow path 82e via the groove 82c.

The oil lock case 80 that allows the valve body 82a to be separated therefrom and seated thereon is formed into a cylindrical shape by bending upper and lower end portions outwards and inwards. In other words, the oil lock case 80 includes seat portions 80a and 80b at the upper and lower end portions, and a case body 80c formed between the seat portions 80a and 80b at a diameter smaller than that of the piston retaining portion 12. In the case body 80c, there is formed a communication hole 80d for communicating an inner side and an outer side of the oil lock case 80.

The communication hole 80d communicates to a cylindrical gap (not denoted by symbol) formed between an outer periphery of the case body 80c and an inner periphery of the piston retaining portion 12 of the inner tube 1, and further communicates to the lubrication gap (not denoted by symbol) formed between the inner tube 1 and the outer tube 2 through the communication hole 12c that is formed in the piston retaining portion 12, to thereby replenish the working fluid onto slide surfaces of the bearing members 13 and 26.

The upper seat portion 80a has a predetermined gap 80e between the upper seat portion 80a and the cylinder 4. An inner periphery of the upper seat portion 80a in the gap 80e is formed at a diameter smaller than that of the outer periphery of the valve body 82a so that the valve body 82a is separated from and seated on an inner peripheral portion on an upper side of the upper seat portion 80a in FIG. 3.

Predetermined gaps 80f and 80g that allow the oil lock piece 6 to be inserted therethrough are formed between an inner periphery of the lower seat portion 80b and the outer periphery of the cylinder 4, and between an inner periphery of the case body 80c and the outer periphery of the cylinder 4, respectively.

When the oil lock piece 6 is fitted into the gap 80g, an oil lock chamber (not shown) formed below the piston 8 in FIG. 3A is pressurized to achieve oil lock, to thereby mitigate a shock that may be generated when the suspension device F is maximally compressed.

On the other hand, the upper end portion of the guide rod 3 in FIG. 1 is fixed to the inner tube 1 through an intermediation of the bracket B, and is arranged in parallel to the inner tube 1. As illustrated in FIG. 1, the guide rod 3 is formed into a cylindrical shape, and a cap member 31 is mounted to the upper opening portion in FIG. 1.

A lower end side of the guide rod 3 in FIG. 1 is axially supported by the guide member G. The guide member G is fixed to an outer surface at an upper end portion of the outer tube 2 in FIG. 1 with a bolt G1.

The guide member G has a through hole 9 that allows the guide rod 3 to pass therethrough. Opening portions on both sides of the through hole 9 (in FIG. 1, the upper side and the lower side) are increased in diameter at two levels.

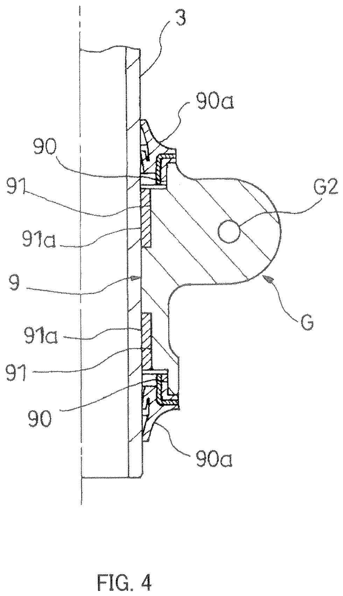

As illustrated in FIG. 4, dust seals 90a and 90a are mounted to outer large diameter portions 90 and 90 formed on an outer side of the opening portions on both sides at a larger diameter, respectively. Bearing members 91a and 91a are mounted to inner large diameter portions 91 and 91 formed on an inner side of the opening portions on both sides at a smaller diameter, respectively.

A fender mounting portion G2 similar to the fender mounting portion 22 formed on the outer tube 2 is formed on an outer side of the guide member G.

Next, actions of the suspension device F according to this embodiment are described.

When the suspension device F is extended, the inner tube 1 retreats from the outer tube 2, and the guide rod 3 slides through the guide member G upwards in FIG. 1.

At this time, inside the shock absorber body D, the extension-side action chamber L10 is pressurized by the piston 8, and hence the valve body 82a is seated on the upper seat portion 80a of the oil lock case 80 so that the outer flow path 82e is closed. Thus, the check valve 82 is closed.

The suspension device F generates a damping force due to a flow path resistance that is generated when the working fluid in the extension-side action chamber L10 flows to the compression-side action chamber L11 through the inner flow path 82d, and to a flow path resistance that is generated when the working fluid in the extension-side action chamber L10 flows to the intra-cylinder working fluid chamber L2 through the head-side orifice 41a of the cylinder 4 and further flows to the compression-side action chamber L11 through the bottom-side orifice 41b.

Further, the working fluid corresponding to the volume of the retreated part of the inner tube 1 when the suspension device is extended is replenished into the compression-side action chamber L11 through the bottom-side orifice 41b.

When the suspension device F is compressed, on the other hand, the inner tube advances into the outer tube 2, and the guide rod 3 slides through the guide member G downwards in FIG. 1.

At this time, inside the shock absorber body D, the compression-side action chamber L11 is pressurized by the piston 8, and hence the valve body 82a abuts against the spring bearing portion 81b of the seat member 81. Thus, the check valve 82 is opened, and the working fluid in the compression-side action chamber L11 flows into the extension-side action chamber L10 through the outer flow path 82e.

The suspension device F generates a damping force due to a flow path resistance that is generated when the excess working fluid corresponding to the volume of the advanced part of the inner tube 1 flows to the intra-cylinder working fluid chamber L2 through the bottom-side orifice 41b.

In other words, the damping force generating portion includes the head-side orifice 41a and the bottom-side orifice 41b formed in the cylinder 4, and the check valve 82 of the piston 8.

In the suspension device F of this embodiment, the guide rod 3 and the inner tube 1 are provided in parallel to each other, and the guide rod 3 passes through the guide member G fixed to the outer tube 2. Accordingly, even when the steering shaft S is rotated to turn the bracket B, the inner tube 1 and the outer tube 2 do not rotate relative to each other.

Therefore, the steering shaft S is rotated through the operation of the handlebar to turn the bracket B about the axis of the steering shaft S, and a direction of the front wheel is changed to allow steering of the motor tricycle. Thus, it is possible to suspend the front wheel in a cantilever manner.

Further, the guide rod 3 is allowed to pass through the guide member G, and hence the relative rotation of the inner tube 1 and the outer tube 2 is prevented. Thus, unlike the related art, there is no need to form a plurality of cylindrical recesses in the outer tube so that the inner tube is inserted through each cylindrical recess in a freely slidable manner.

Thus, in the guide member G, the axial length of the through hole 9 arranged in parallel to the outer tube 2 can be shortened as compared to the related art cylindrical recesses, and hence the process becomes easier as compared to the related art.

Further, in this structure, the outer tube 2 and the through hole 9 are only arranged in parallel to each other, and hence the process of forming the holes in the bracket B, in other words, the process of forming the inner tube retaining portion B1 and the guide rod retaining portion B2 can be carried out more easily as compared to the related art.

Further, it is only necessary that a single shock absorber body D for accommodating the suspension spring 5 and the damping force generating portion be mounted for each front wheel of a single motor tricycle, in other words, two shock absorber bodies be mounted in total. Thus, the number of components can be reduced more significantly as compared to the related art suspension device that requires four shock absorber bodies.

Further, the guide member G is mounted to the opening portion of the outer tube 2 on a side on which the inner tube is inserted, and hence the length of the guide rod 3 can be shortened.

Further, the guide member G includes the through hole 9 that allows the guide rod 3 to pass therethrough, the pair of dust seals 90a and 90a mounted to the opening portions on both sides of the through hole 9, respectively, and the annular bearing members 91a and 91a arranged between the dust seals 90a and 90a and brought into slidable contact with an outer periphery of the guide rod 3.

Thus, the bearing members 91a and 91a can axially support the guide rod 3 securely, and the dust seals 90a and 90a prevent dust from entering slide surfaces of the bearing members 91a and 91a, with the result that the smooth slide of the guide rod 3 can be maintained.

The embodiments of the present invention described above are merely illustration of some application examples of the present invention and not of the nature to limit the technical scope of the present invention to the specific constructions of the above embodiments.

For example, the above-mentioned embodiment exemplifies a case where each front wheel of a motor tricycle including two front wheels and one rear wheel is suspended by the suspension device F in a cantilever manner. Alternatively, the suspension device F may be applied to a motor bicycle. In this case, a single front wheel is suspended by the suspension device F in a cantilever manner.

Further, the above-mentioned embodiment exemplifies an upright shock absorber, in which the inner tube 1 is coupled to the vehicle body side and the outer tube 2 is coupled to the wheel side.

Further, the configuration of the damping force generating portion is not limited to the above-mentioned configuration, and other configurations may be adopted as appropriate.

Further, the above-mentioned embodiment exemplifies the pair of suspension devices F for suspending the respective front wheels in a cantilever manner in the motor tricycle including two front wheels and one rear wheel. As an alternative structure, the shock absorber body of one suspension device may accommodate the damping force generating portion, and the shock absorber body of the other suspension device may accommodate the suspension spring.

Further, the above-mentioned suspension device F includes a single guide rod 3, but as an alternative structure, a single suspension device may include a plurality of guide rods 3. In this case, a plurality of through holes that allow the guide rods 3 to be inserted therethrough may be provided to a single guide member, or a plurality of guide members each having a single through hole may be fixed to the outer tube.

Further, in the above-mentioned embodiment, the suspension device F is light-weighted by forming the guide rod 3 into a cylindrical shape, but the guide rod 3 may be formed into a solid column shape.

Further, in the above-mentioned embodiment, the outer tube 2 and the guide member G are formed separately and linked to each other with the bolt G1, but the outer tube 2 and the guide member G may be formed integrally.

The present application claims a priority based on Japanese Patent Application No. 2011-161519 filed with the Japan Patent Office on July 25, 2011.

## Claims

1. A suspension device (F), configured to be interposed between a vehicle main body and a wheel, capable of suspending the wheel in a cantilever manner, the suspension device (F) comprising:
a shock absorber body (D) including an inner tube (1) and an outer tube (2) that allows the inner tube (1) to be inserted therethrough in a freely slidable manner;
one or more guide rods (3) parallel to the inner tube (1), the one or more guide rods (3) each having an upper end portion fixed to an upper end portion of the inner tube (1) through an intermediation of a bracket (B); and
a guide member (G) mounted to an opening portion of the outer tube (2) on a side on which the inner tube (1) is inserted, for axially supporting a lower end side of the one or more guide rods (3) passing through the guide member (G) in a freely slidable manner,
**characterized in that**
the guide member (G) comprises:
a through hole (9) that allows each of the one or more guide rods (3) to pass therethrough;
a pair of dust seals (90a, 90a) mounted to opening portions on both sides of the through hole (9), respectively; and
an annular bearing member (91a) arranged between the pair of dust seals (90a, 90a) and brought into slidable contact with an outer periphery of the each of the one or more guide rods (3).

2. A motor tricycle comprising:
a pair of suspension devices (F) according to claim 1;
two front wheels serving as steering wheels; and
one rear wheel serving as a drive wheel, wherein
the two front wheels are suspended by the respective suspension devices (F).

## Patentansprüche

1. Aufhängungsvorrichtung (F), die dazu eingerichtet ist, zwischen einem Fahrzeughauptkörper und einem Rad angeordnet zu sein, und in der Lage ist, das Rad freischwingend aufzuhängen, wobei die Aufhängungsvorrichtung (F) umfasst:
einen Stoßdämpferkörper (D) mit einem Innenrohr (1) und einem Außenrohr (2), in das das Innenrohr (1) frei gleitend durchlaufendeingeführt werden kann;
eine oder mehrere Führungsstangen (3) parallel zum Innenrohr (1), wobei die eine oder die mehreren Führungsstangen (3) jeweils einen oberen Endabschnitt aufweisen, der an einem oberen Endabschnitt des Innenrohres (1) mittels einer Konsole (B) befestigt ist; und
ein Führungselement (G), das an einem Öffnungsabschnitt des Außenrohrs (2) an einer Seite angebracht ist, an der das Innenrohr (1) eingefügt ist, um eine untere Stirnseite der einen oder der mehreren Führungsstangen (3), die das Führungselement (G) frei gleitend durchlaufen, axial zu halten,
**dadurch gekennzeichnet, dass**
das Führungselement (G) umfasst:
ein Durchgangsloch (9), das es jeder der einen oder der mehreren Führungsstangen (3) gestattet, dieses zu durchlaufen;
ein Paar Staubdichtungen (90a, 90a), die jeweils an Öffnungsabschnitten auf beiden Seiten des Durchgangslochs (9) angebracht sind; und
ein ringförmiges Lagerelement (91a), das zwischen dem Paar von Staubdichtungen (90a, 90a) angeordnet ist und in einen gleitenden Kontakt mit einem Außenumfang der jeweils einen oder mehreren Führungsstangen (3) gebracht ist.

2. Motordreirad, umfassend:
ein Paar Aufhängungsvorrichtungen (F) nach Anspruch 1;
zwei Vorderräder, die als Lenkräder dienen; und
ein Hinterrad, das als Antriebsrad dient, wobei
die beiden Vorderräder durch die jeweiligen Aufhängungsvorrichtungen (F) aufgehängt sind.

## Revendications

1. Dispositif de suspension configuré pour s'intercaler entre le corps principal d'un véhicule et une roue, capable de suspendre la roue en cantilever (porte-à-faux), le dispositif de suspension (F) comprenant :
un corps amortisseur (D) comprenant un tube interne (1) et un tube externe (2) qui permet au tube interne (1) de s'insérer dans le tube externe et d'y coulisser librement ;
une ou plusieurs tiges de guidage (3) parallèles au tube interne (1), l'une ou plusieurs tiges de guidage (3) disposant chacune d'une partie d'extrémité supérieure fixée à une partie d'extrémité supérieure du tube interne (1) par l'intermédiaire d'un support (B) ; et
un élément de guidage (G) fixé sur une partie ouvrante du tube externe (2) sur un côté sur lequel le tube interne (1) est inséré, pour soutenir selon l'axe un côté d'extrémité inférieure de l'une ou plusieurs tiges de guidage (3) traversant l'élément de guidage (G) de manière à coulisser librement,
**caractérisé en ce que**
l'élément de guidage (G) comprend :
un trou traversant (9) qui permet à chacune de l'une ou plusieurs tiges de guidage (3) de le traverser ;
une paire de joints anti-poussière (90a, 90a) fixés sur les parties ouvrantes des deux côtés du trou traversant (9), respectivement ; et
un élément de soutien annulaire (91a) disposé entre la paire de joints anti-poussière (90a, 90a) entrant en contact coulissant avec une périphérie externe de la chacune de l'une ou plusieurs tiges de guidage (3).

2. Un tricycle motorisé comprenant :
une paire de dispositifs de suspension (F) selon la revendication 1 ;
deux roues avant servant de roues directrices ; et
une roue arrière servant de roue motrice, dans lequel
les deux roues avant sont suspendues par les dispositifs de suspension (F) respectifs.
